# EUROPEAN PATENT SPECIFICATION

(11) **EP 4 624 710 B1**
(45) Date of publication and mention of the grant of the patent: **21.10.2026**
(21) Application number: 25191097.2
(22) Date of filing: 29.09.2022
(51) Int. Cl.: E05B 15/16, E05B 67/04, E05B 67/06, E05B 71/00

(54) **SECURITY DEVICES**
SICHERHEITSVORRICHTUNGEN
DISPOSITIFS DE SÉCURITÉ

(30) Priority: 29.09.2021 GB 202113956
(43) Date of publication of application: 01.10.2025
(62) Document number(s) of the earlier application(s) in accordance with Art. 76 EPC: 22786407.1 / 4 326 963
(73) Proprietor: Zeal Innovation Ltd, Swansea Waterfront, Swansea SA1 8QY (GB)
(72) Inventor: BARRON, Neil Anthony, Swansea, SA3 1PQ (GB)
(74) Representative: Marks & Clerk LLP

(56) References cited:
- WO-A1-2013/017525
- DE-A1- 102010 047 020
- US-A- 3 777 517

## Description

This invention relates to security devices and particularly to the use of cut-resistant materials in elongate elements forming essential components in security devices. An object of the invention is to provide an element that is so difficult to be cut as to deter or prevent thieves from breaking a device secured by the element. The invention is particularly directed at security devices in which at least one end of an elongate body is attachable to a lock unit.

Examples of known cut-resistant materials are cermet; tungsten carbide; titanium carbide; titanium nitride, and titanium carbon nitride. It is known to use a material such as tungsten carbide to form a wear resistant layer on a surface. Such layers can be formed by flame spraying and/or laser cladding. Typically, tungsten carbide particles are dispersed in a self-fluxing matrix or alloy based on nickel, iron or cobalt in composition with chromium, silicon and boron as discussed in a conference paper entitled "High temperature erosion wear of cermet particles reinforced self-fluxing alloy matrix HVOF sprayed coatings" published in Materials Science in September 2015. Products bearing such layers or coatings are available from various companies such as ASB Industries Inc. of Barburton, Ohio, USA; B&B Precision Engineering of Huddesfield, UK, and Oelikon Metco of Pfafficon, Switzerland.

Reference is also directed to US Patent Nos.4136230 and 4561272; and US published Application No 2005/0092038; and European Patent publication Nos. 2740553, 2808107 and 3974552, all of which disclose the use of tungsten carbide in an alloy matrix.

WO 2013/017525 A1 discloses a method for producing a component for use in a locking device, the method comprising the introduction of grooves and filler compound in the main part of the locking device.

DE 102010 047020 A1 discloses a method for coating the surfaces of a locking device with which a substrate can be coated in such a way that it can no longer be forcibly destroyed by drilling, sawing, grinding, cutting, squeezing, pinching or other material-removing methods.

US 3 777 517 A discloses a lock shackle formed of an elongated metal core having longitudinally extending shallow grooves formed in its surface, and a thin wall tube closely fitted around the core, with the grooves filled with a matrix formed of hard carbide particles and a soft material binder.

The present invention resides in the concept of reinforcing an operative component of a locking device with a cut-resistant material. According to the invention a security device is provided in accordance with claim 1.

The security device has a metallic elongate body with at least one end attachable to a lock unit. The body has at least one track of material extending longitudinally on the surface thereof. The material of the track has particles of a hard cut-resistant material dispersed in a self-fluxing matrix of lower melting point than that of the body and comprising one of nickel, iron and cobalt in composition with chromium, silicon and boron. The or each track is welded or brazed to the elongate body. Preferably laser welding, laser cladding or plasma arc welding may be used. The lower melting point prevents melting of the elongate body while enabling a metallurgical bond. Tungsten carbide is the preferred hard cut-resistant material, but other materials might be used, such as silicon carbide, cubic boron nitride, or industrial or synthetic diamond.

Preferred matrices used in the track material in devices of the invention are based on nickel or cobalt, ideally with a hardness of around 50-60 HRC (Rockwell C hardness). Particularly preferred matrices are based on nickel with the optional inclusion of iron. In the matrix forming the tracks in elements of the invention the hardness of the cut-resistant particles is preferably in the range 2500 to 3000Hv (Vickers Hardness), and that of the matrix 500 to 600Hv.

The base material of the elongate body is normally steel, typically a low carbon hardened steel. A preferred material is a low carbon steel case hardened to 58-60 HRC.

The matrix with the dispersed particles can be in solid or powder form. In solid form it is delivered as a rod or wire which must be melted in the application of the tracks. This can generate more heat at the area of application resulting in migration of the body material into the tracks. A preferred application process uses a powder form which is delivered and welded directly to the body to form the tracks. Migration of the material of the elongate body into the matrix should be kept to a minimum, preferably to no more than 10% by volume of the track material.

The particles in the matrix forming the tracks in elements of the invention are preferably in spherical form and a typical size variation is in the range 50 - 160µm. The particles can also be in cast and crushed form. In this form the dimensions of the particles will typically vary between 50 and 200µm. A mixture of spherical and crushed particle could also be used in some embodiments. The size variation of the particles determines the density of the particles in the matrix, but too small particles can melt or disintegrate when the tracks are applied to the body, and too large particles may not be retained. The particles will normally comprise 40-65% by volume of the track material.

In most embodiments of the invention a plurality of separate tracks will extend on the surface of the body, normally three or four. However, in a particular embodiment tracks extend contiguously side by side to fully clad the body. In other embodiments tracks can be applied in different directions such that they cross each other on the surface of the elongate body. In some embodiments, after the track or tracks have been applied, it or they can be compressed into the body to re-establish substantially its original cross section. At the end or ends of the body to be received in a locking unit, this compression can be restricted to the respective end section. The track or tracks will normally extend the full length of the elongate body, but can terminate short of one or each end of the body to leave an end section for receipt in an opening of matching cross section in the lock unit.

In devices according to the invention tracks of material similar to that of the track or tracks on the elongate body may also be applied to the lock unit. Particularly, where an end of the body is adapted to enter an opening in the unit, a track of the material may be metallurgically bonded to the lock unit around the boundary of the opening.

The dimensions of the or each track on the elongate body in elements of the invention will vary depending upon the dimensions of the respective body. However, on a body of circular cross section with a diameter up to 5cms, a typical maximum track thickness will no more than 2mm and preferably no more than 1mm, and a typical width will be in the range 3-10mm.

In all embodiments of the invention the finished product may be plated, or coated or encapsulated in a polymeric material, preferably a low pressure plant based polymer, to give corrosion resistance and longevity as well as disguising the location and pattern of the reinforcing tracks.

Devices of the invention can be used in a variety of portable security devices such as cycle and motorcycle locks; for example padlocks and D-locks or U-locks of the kind described in European Patent Nos.3193405 and 3584394, and also in door locks, safes, catalytic converter locks given as examples of many other applications.

The invention is also directed at a method of reinforcing an elongate metal body of the kind described herein by welding thereto at least one track of a material comprising particles of tungsten carbide or other hard, wear or cut resistant material as described herein suspended in a low melting point self-fluxing metal based matrix.

The invention will now be described by way of example and with reference to the accompanying schematic drawings, wherein:
Figure 1 is a perspective view of the locking portion of a device including a security element according to the invention;
Figures 2 and 3 illustrate the forms of tungsten carbide dispersed in the matrix in the track 8 of Figure 1;
Figure 4 is a perspective view of elongate bodies embodying the invention;
Figure 5 shows cross sections of elongate bodies embodying the invention;
Figures 6 and 7 show how the present invention can be exploited on products and
Figure 8 is a micrograph showing a cross section of a track bonded to a security element in a device of the invention.

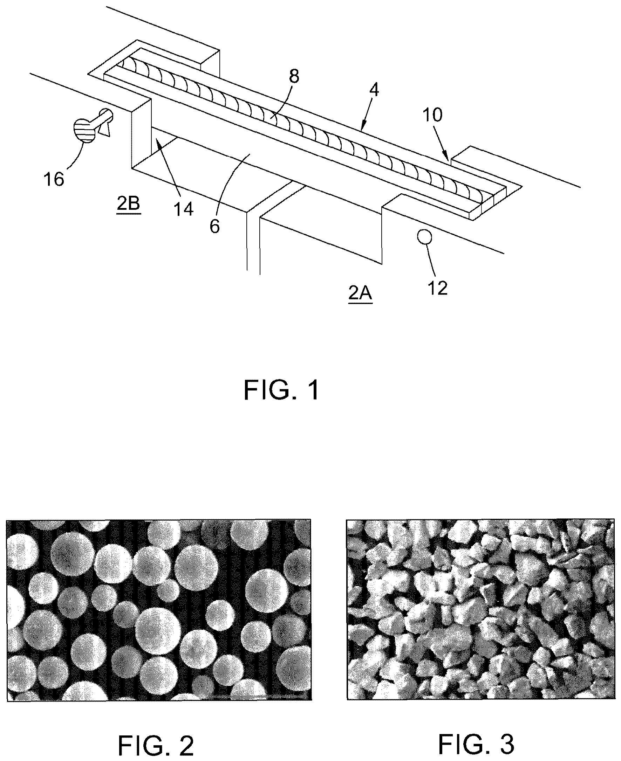

Figure 1 shows two housing members 2A and 2B secured together by an elongate security element 4. The element 4 consists of a solid metal, typically steel, bar 6 with a track 8 welded thereon. The material of the track comprises a hard cut-resistant material such as tungsten carbide in a low melting point self-fluxing matrix or alloy of the kind referred to above. At one end the element 4 is mounted in a slot 10 on housing member 2A for pivotal movement about an axle 12 fixed in the member 2A. The other end the element is received in a slot 14 where it is held by a locking mechanism (not shown) operated by a removable key 16. With the bar secured in place as shown the bar traverses the recess defined between housing members 2 with little space between the bar and the base of the recess. This space is inaccessible by any conventional cutting mechanism so the underside of the bar 2 as shown is protected by the housing members 2. When the other end of the bar is released by the lock mechanism, it can pivot clockwise as shown to enable the housing members to separate. Of course, the locking mechanism could be operable merely to detach the bar end from the housing member 2B, enabling it to be directly withdrawn from the slot 14, in which case the bar could be fixedly attached to the housing member 2A.

The self-fluxing matrix is based on nickel in combination with chromium, silicon and boron. A preferred composition includes 15% chromium; 3% boron; 4.5% silicon; 0.65% carbon, and 3% iron, with the balance being nickel, although some ceramic is normally also included.

Figure 2 shows spherical particles of tungsten carbide (WC) dispersed in a nickel based matrix of the kind shown in Figure 1. The dispersal is random, and the smaller particles will tend to occupy spaces between the larger ones. The size of the particles will vary in the range 50-160µm diameter. The matrix is nickel based and contains silicon and boron. Composites of such particles in this matrix are available from Stoody Industrial Welding Supply, Inc. of San Diego California, USA. The content of WC particles in the matrix is around 65% by volume. Figure 3 shows cast and crushed particles of WC in the same nickel based matrix as that of Figure 2. As can be seen, the density of the particles appears greater than that in Figure 2, at around 80%

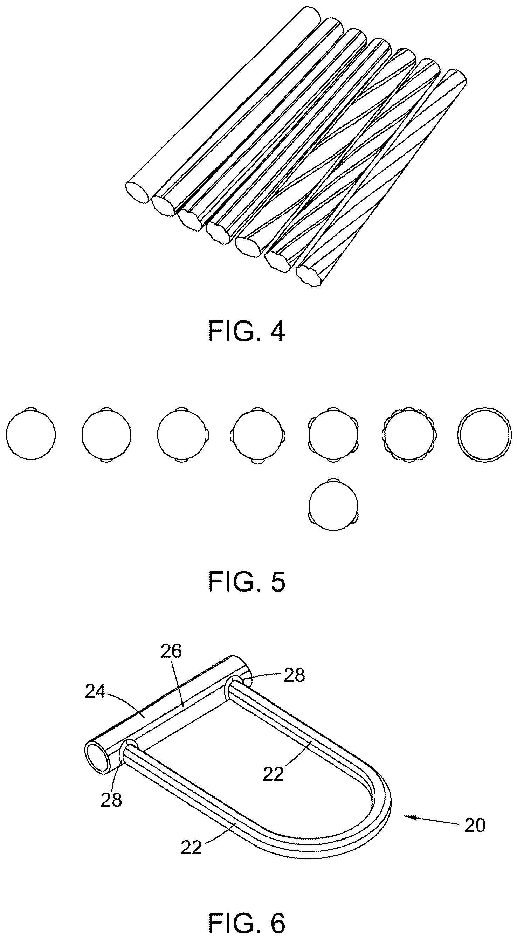

Figure 1 shows an elongate security element of substantially square cross section, but any suitable cross section can be adopted. The single track 8 may be duplicated on or more other sides of a polygonal cross sectioned body, but the invention is normally embodied in elements in the form of a circular cross sectioned elongate body. Examples are illustrated in Figure 4 in which tracks are applied in different patterns to different solid bodies; four with one, four, six or eight linear tracks, and three with four, six or eight spiral tracks. Cross sections of similar bodies are shown in Figure 5. As can be seen it is possible to apply tracks very close together and indeed contiguously or such that they overlap and fully clad the body.

As noted above, the track or tracks applied to an elongate body in devices of the invention can be compressed into the body to substantially re-establish the body's original cross section. A benefit of this is that the position of the tracks can be obscured or disguised. Another is that the tracks can extend to one or both ends of the body which can then be received in a locking or other unit designed to receive the original body shape.

The present invention can be embodied in well known security devices. One such device is the D-lock or U-lock commonly used for cycles and motorcycles. Figure 6 shows how the "D" or "U" section 20 can be reinforced by the application of tracks 22 welded thereto as described above. On the reinforced body illustrated the tracks may terminate short of the ends of the section enabling the ends to be received in openings in the locking bar 24 of the original product of the same cross section as the unreinforced section. The bar itself may also be reinforced by one or more tracks 26. In a preferred feature which applies to all embodiments of the invention additional tracks 28 can be welded around the points at which the section ends are received in the bar or lock unit. Of course, if the tracks 22 are compressed into the section 20 they can extend to the ends and into the locking bar 24. It will be understood then, that the invention can be exploited retrospectively on existing products.

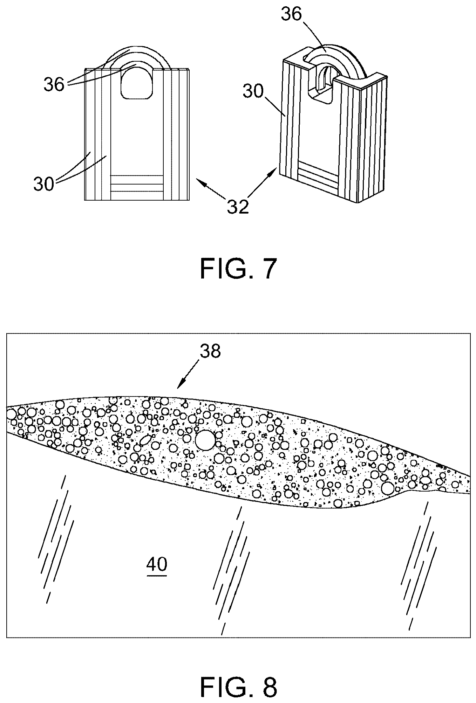

Another known security device that can be strengthened using the present invention is a padlock. As shown in Figure 7 tracks 30 of the matrix with dispersed WC can be welded to the padlock body 32, in addition to the tracks 34 welded to the shackle 36.

The micrograph shown in Figure 8 illustrates the bond between a track 38 and an elongate element or body 40 in a device of the invention. with minimal migration of the track material into the material of the body. As can be seen, tungsten carbide particles (shown white) in a variety of sizes are distributed in the self-fluxing matrix or alloy (shown grey) which has displaced some of the material of the body as it has been applied, either by compression or softening of the material during the application process. While the distribution of the particles is random, the concentration is clearly sufficient to ensure resistance to any attempt to cut through it.

## Claims

1. A security device in which a metallic elongate body (4, 20, 36, 40) has at least one end attachable to a lock unit (24, 32), wherein the body (4, 20, 36, 40) has at least one track (8, 22, 34, 38) extending longitudinally on the surface thereof, the material of the track having particles of a hard cut-resistant material dispersed in a self-fluxing matrix of lower melting point than that of the body (4, 20, 36, 40) and comprising one of nickel, iron and cobalt in composition with chromium, silicon and boron, the or each track being welded or brazed to the elongate body (4, 20, 36, 40).

2. A security device according to Claim 1 wherein the matrix includes a ceramic material.

3. A security device according to any preceding Claim wherein the material of the cut-resistant particles comprises at least one of tungsten carbide, silicon carbide and an industrial or synthetic diamond.

4. A security device according to any preceding Claim wherein the cut-resistant particles are in spherical form.

5. A security device according to Claim 5 wherein the particle size varies in the range 50 - 160µm.

6. A security device according to any of Claims 1 to 3 wherein the particles are in cast and crushed form.

7. A security device according to Claim 6 wherein the dimensions of the particles vary between 50 and 200µm.

8. A security device according to any preceding Claim wherein the particles comprise 40-65% of the track (8, 22, 34, 38) material.

9. A security device according to any preceding Claim wherein a plurality of said tracks (8, 22, 34, 38) cross each other on the surface of the elongate body (4, 20, 36, 40).

10. A security device according to any preceding Claim wherein said at least one track (8, 22, 34, 38) has a maximum thickness of 2mm

11. A security device according to any preceding Claim wherein said at least one track (8, 22, 34, 38) has a width in the range 3-10mm.

12. A security device according to any preceding Claim wherein the elongate body (4, 20, 36, 40) has a circular, square or polygonal cross section.

13. A security device according to any preceding Claim wherein said at least one end of the elongate body (4, 20, 36, 40) is attachable to the lock unit (24, 32) by entering an opening therein, and wherein a track (8, 22, 34, 38) of material having particles of a hard cut-resistant material dispersed in a self-fluxing matrix comprising one of nickel, iron and cobalt in composition with chromium, silicon and boron is metallurgically bonded with the lock unit (24, 32) around the boundary of the opening.

14. A security device according to Claim 13 wherein the material of the cut-resistant particles in the track (8, 22, 34, 38) around the opening comprises at least one of tungsten carbide, silicon carbide and an industrial or synthetic diamond.

15. A security device according to any preceding Claim wherein the elongate body (4, 20, 36, 40) is encapsulated in a layer of polymeric material.

16. A padlock comprising a security device according to any preceding Claim wherein the elongate element is the padlock shackle.

17. A D-lock comprising a security device according to any preceding Claim wherein each end of the element is adapted to engage a locking bar.

## Patentansprüche

1. Sicherheitsvorrichtung, bei der ein metallischer länglicher Körper (4, 20, 36, 40) mindestens ein Ende aufweist, das an einer Schlosseinheit (24, 32) befestigt werden kann, wobei der Körper (4, 20, 36, 40) mindestens eine längs auf seiner Oberfläche verlaufende Führungsschiene (8, 22, 34, 38) aufweist, wobei das Material der Schiene Partikel eines harten, schnittfesten Materials in einer selbstfließenden Matrix mit einem niedrigeren Schmelzpunkt als dem des Körpers (4, 20, 36, 40) dispergiert aufweist und eines von Nickel, Eisen und Kobalt in Verbindung mit Chrom, Silizium und Bor umfasst, wobei die oder jede Führungsschiene mit dem länglichen Körper (4, 20, 36, 40) verschweißt oder verlötet ist.

2. Sicherheitsvorrichtung nach Anspruch 1, wobei die Matrix ein keramisches Material beinhaltet.

3. Sicherheitsvorrichtung nach einem vorstehenden Anspruch, wobei das Material der schnittfesten Partikel mindestens eines von Wolframcarbid, Siliciumcarbid und einem industriellen oder synthetischen Diamanten umfasst.

4. Sicherheitsvorrichtung nach einem vorstehenden Anspruch, wobei die schnittfesten Partikel kugelförmig sind.

5. Sicherheitsvorrichtung nach Anspruch 5, wobei die Partikelgröße im Bereich von 50 - 160 µm variiert.

6. Sicherheitsvorrichtung nach einem der Ansprüche 1 bis 3, wobei die Partikel in gegossener und zerkleinerter Form vorliegen.

7. Sicherheitsvorrichtung nach Anspruch 6, wobei die Abmessungen der Partikel zwischen 50 und 200 µm variieren.

8. Sicherheitsvorrichtung nach einem vorstehenden Anspruch, wobei die Partikel 40-65% des Materials der Schiene (8, 22, 34, 38) umfassen.

9. Sicherheitsvorrichtung nach einem vorstehenden Anspruch, wobei mehrere der Schienen (8, 22, 34, 38) einander auf der Oberfläche des länglichen Körpers (4, 20, 36, 40) schneiden.

10. Sicherheitsvorrichtung nach einem vorstehenden Anspruch, wobei die mindestens eine Schiene (8, 22, 34, 38) eine maximale Dicke von 2 mm aufweist.

11. Sicherheitsvorrichtung nach einem vorstehenden Anspruch, wobei die mindestens eine Schiene (8, 22, 34, 38) eine Breite in dem Bereich von 3 - 10 mm aufweist.

12. Sicherheitsvorrichtung nach einem vorstehenden Anspruch, wobei der längliche Körper (4, 20, 36, 40) einen kreisförmigen, quadratischen oder polygonalen Querschnitt aufweist.

13. Sicherheitsvorrichtung nach einem vorstehenden Anspruch, wobei das mindestens eine Ende des länglichen Körpers (4, 20, 36, 40) an der Schlosseinheit (24, 32) befestigt werden kann, indem er in eine Öffnung darin eingeführt wird, und wobei eine Schiene (8, 22, 34, 38) aus Material, das Partikel eines harten, schnittfesten Materials in einer selbstfließenden Matrix dispergiert aufweist, umfassend eines von Nickel, Eisen und Kobalt in einer Zusammensetzung mit Chrom, Silizium und Bor, metallurgisch mit der Schlosseinheit (24, 32) um den Rand der Öffnung herum gebunden ist.

14. Sicherheitsvorrichtung nach Anspruch 13, wobei das Material der schnittfesten Partikel in der Schiene (8, 22, 34, 38) um die Öffnung mindestens eines von Wolframcarbid, Siliciumcarbid und einem industriellen oder synthetischen Diamanten umfasst.

15. Sicherheitsvorrichtung nach einem vorstehenden Anspruch, wobei der längliche Körper (4, 20, 36, 40) in einer Schicht aus polymerem Material eingekapselt ist.

16. Vorhängeschloss, das eine Sicherheitsvorrichtung nach einem vorstehenden Anspruch umfasst, wobei das längliche Element der Vorhängeschlossbügel ist.

17. Bügelschloss, das eine Sicherheitsvorrichtung nach einem vorstehenden Anspruch umfasst, wobei jedes Ende des Elements dazu ausgelegt ist, mit einer Verriegelungsstange einzugreifen.

## Revendications

1. Dispositif de sécurité dans lequel un corps allongé métallique (4, 20, 36, 40) présente au moins une extrémité pouvant être fixée à une unité de verrouillage (24, 32), dans lequel le corps (4, 20, 36, 40) présente au moins une piste (8, 22, 34, 38) s'étendant longitudinalement sur sa surface, le matériau de la piste présentant des particules d'un matériau dur résistant aux coupures dispersées dans une matrice autodécapante à point de fusion inférieur à celui du corps (4, 20, 36, 40) et comprenant un parmi du nickel, du fer et du cobalt en composition avec du chrome, du silicium et du bore, la ou chaque piste étant soudée ou brasée sur le corps allongé (4, 20, 36, 40).

2. Dispositif de sécurité selon la revendication 1, dans lequel la matrice inclut un matériau de céramique.

3. Dispositif de sécurité selon une quelconque revendication précédente, dans lequel le matériau des particules résistantes aux coupures comprend au moins un parmi le carbure de tungstène, le carbure de silicium et du diamant industriel ou synthétique.

4. Dispositif de sécurité selon une quelconque revendication précédente, dans lequel les particules résistantes aux coupures sont de forme sphérique.

5. Dispositif de sécurité selon la revendication 5, dans lequel la taille de particules varie dans la plage de 50 à 160 µm.

6. Dispositif de sécurité selon l'une quelconque des revendications 1 à 3, dans lequel les particules sont sous forme moulée et broyée.

7. Dispositif de sécurité selon la revendication 6, dans lequel les dimensions des particules varient entre 50 et 200 µm.

8. Dispositif de sécurité selon une quelconque revendication précédente, dans lequel les particules comprennent de 40 à 65 % du matériau de la piste (8, 22, 34, 38).

9. Dispositif de sécurité selon une quelconque revendication précédente, dans lequel une pluralité desdites pistes (8, 22, 34, 38) se croisent sur la surface du corps allongé (4, 20, 36, 40).

10. Dispositif de sécurité selon une quelconque revendication précédente, dans lequel au moins une piste (8, 22, 34, 38) présente une épaisseur maximale de 2 mm.

11. Dispositif de sécurité selon une quelconque revendication précédente, dans lequel ladite au moins une piste (8, 22, 34, 38) présente une largeur dans la plage de 3 à 10 mm.

12. Dispositif de sécurité selon une quelconque revendication précédente, dans lequel le corps allongé (4, 20, 36, 40) présente une section transversale circulaire, carrée ou polygonale.

13. Dispositif de sécurité selon une quelconque revendication précédente, dans lequel ladite au moins une extrémité du corps allongé (4, 20, 36, 40) peut être fixée à l'unité de verrouillage (24, 32) en entrant dans une ouverture de celle-ci, et dans lequel une piste (8, 22, 34, 38) de matériau présentant des particules d'un matériau dur résistant aux coupures dispersées dans une matrice autodécapante comprenant du nickel, du fer et du cobalt en composition avec du chrome, du silicium et du bore est liée métallurgiquement à l'unité de verrouillage (24, 32) autour du bord de l'ouverture.

14. Dispositif de sécurité selon la revendication 13, dans lequel le matériau des particules résistantes aux coupures dans la piste (8, 22, 34, 38) autour de l'ouverture comprend au moins un parmi le carbure de tungstène, le carbure de silicium et du diamant industriel ou synthétique.

15. Dispositif de sécurité selon une quelconque revendication précédente, dans lequel le corps allongé (4, 20, 36, 40) est encapsulé dans une couche de matériau polymère.

16. Cadenas comprenant un dispositif de sécurité selon une quelconque revendication précédente, dans lequel l'élément allongé est l'arceau du cadenas.

17. Antivol en U comprenant un dispositif de sécurité selon une quelconque revendication précédente, dans lequel chaque extrémité de l'élément est adaptée pour venir en prise avec une barre de verrouillage.
